# EUROPEAN PATENT SPECIFICATION

(11) **EP 1 542 927 B1**
(45) Date of publication and mention of the grant of the patent: **23.04.2008**
(21) Application number: 03750566.6
(22) Date of filing: 18.09.2003
(51) Int. Cl.: C02F 1/32

(54) **METHOD AND APPARATUS FOR DEGERMINATION OF WASTE WATER AND OXIDATIVE INACTIVATION OF SUBSTANCES CONTAINED THEREIN**
VERFAHREN UND VORRICHTUNG ZUR ENTKEIMUNG VON ABWASSER UND OXIDATIVEN INAKTIVIERUNG DER DARIN ENTHALTENEN INHALTSSTOFFE
PROCEDE ET DISPOSITIF DE DEGERMINATION DES EAUX USEES ET INACTIVATION OXYDATIVE DE SUBSTANCES CONTENUES DANS CES EAUX USEES

(30) Priority: 24.09.2002 EP 02021171
(43) Date of publication of application: 22.06.2005
(73) Proprietor: Herwig, Ulrich, 74731 Walldürn (DE)
(72) Inventor: HERWIG, Sascha, 74736 Hardheim (DE); TRAGESER, Martin, 63579 Freigericht-3 (DE); WURSTER, Bernd, 78467 Konstanz (DE)
(74) Representative: Englaender, Klaus
(86) International application number: PCT/EP2003/010361
(87) International publication number: WO 2004/028977

(56) References cited:
- EP-A- 0 317 735
- DE-A- 4 134 711
- DE-A- 4 206 596
- FR-A- 2 745 464
- FR-A- 2 768 718
- US-A- 5 151 174
- GULYAS H ET AL: "KANN DIE UV-DESINFEKTION IN GEGENWART VON TITANDIOXID DEN CSB VON KLAERANLAGENABLAEUFEN REDUZIEREN?" KORRESPONDENZ ABWASSER, ABWASSERTECHNISCHE VEREINIGUNG, ST. AUGUSTIN, DE, vol. 40, no. 7, 1 July 1993 (1993-07-01), pages 1144-1147, XP000377772 ISSN: 0341-1540

## Description

### FIELD OF THE INVENTION

The present invention relates to the treatment of waste water by ultra violet light radiation for degermination and oxidative inactivation as well as for the degradation of substances contained therein, particularly of waste water of biological treatment plants or final clarification plants.

### BACKGROUND OF THE INVENTION

The purified waste water drawn off or flowing from biological treatment plants contains bacteria and substances which are microbiologically poorly degradable, such as for instance endocrine or hormonal compounds having the effect of oestrogen.

In municipal treatment plants, domestic and industrial waste waters are purified by means of bacteria and substantially freed from organic (CBS, BSB₅) and inorganic substances (ammonium, nitrate, phosphate). While microbiological degradation is going on in the activation basin, the bacterial sludge is separated from the treated water in a secondary or final clarification basin. The clarified water is collected in a channel or trough, called effluent launder, of the final clarification basin and guided via an outlet into a body of flowing receiving water (draining ditch). Since the separation of the bacteria in the final clarification basin is not complete, the effluent clarified water still contains a small portion of the bacteria. The clarified water contains moreover substances which are microbiologically degradable with difficulties only, such as for instance oestrogens and related chemical compounds having the effect of oestrogen, however, it contains also other hormones and active substances which cannot sufficiently be inactivated during conventional routine operation of the treatment plant.

For water degermination, UV irradiation has proved to be useful because it is effective and can get along without any chemicals while not producing any secondary harmful substances. Degermination of the effluent of treatment plants is so far performed in UV reactors downstream of the final clarification basin, where, as a rule, piping to the reactor, an additional pump and a housing for the reactor are required.

The substances having the effect of oestrogen present in the effluent of the treatment plant originate, on one hand, from human excretions and from various industrial chemicals (bisphenol A, nonylphenol and others), on the other. Most complete inactivation of oestrogen agents is of substantial significance since, in bodies of receiving waters, they can lead to the feminization of aquatic organisms. Moreover, it should be avoided that these active substances, via surface waters, can get into the drinking water and in this way into human beings, producing similarly negative effects.

To overcome this problem, a few pilot experiments have been made in the treatment plant field, for instance by using diaphragm biology wherein the bacteria rest for a longer period of time in the activation stage and populations are formed which can more effectively degrade certain active substances. Other investigations show that by adsorption flocculation filtration with activated carbon, substances having the effect of oestrogen can be eliminated from the effluent of the treatment plant. The high operation costs connected therewith, however, constitute a restraint to the implementation of this method.

From applications in waste water purification by various anti-baby pill producers, it has been known that oestrogens can relatively well be inactivated by means of UV-activated oxidation. In such applications, an oxidant such as hydrogen peroxide is added which can be split by UV rays into hydroxyl radicals. Hydroxyl radicals as very strong oxidant attack the oestrogens and decompose them whereby their activity is lost. Other hormones and active substances can be inactivated and decomposed by means of UV-activated oxidation as well.

It has also been known that titanium dioxide in the anatase modification acts as photo catalyst. That means that UV light having wave lengths below 380 nm effects an excitation of titanium dioxide, and the excited titanium dioxide reacts with water, forming hydroxyl radicals. This kind of treatment has already been taken into consideration for waste water treatment.

For disinfection by means of UV radiation, it has furthermore been known to provide on top of the bottom of a channel, in which waste water flows, an apparatus for UV radiation. The waste water flowing through the channel passes through the UV radiation apparatus. The UV radiation apparatus includes several UV modules arranged in parallel relative to each other and extending horizontally in the flow direction of the flowing waste water. Compare for instance EP 1016630 A.

FR 2745464 A discloses a device for preventing or reducing the growth of algae on damp or submerged surfaces of an effluent channel of a waste water treatment plant. The device comprises ultraviolet lamps mounted to the underside of a scraper movably provided above the effluent channel in order to continuously move the ultraviolet lamps along the effluent channel and sequentially irradiate surfaces of the effluent channel. This moving UV irradiation device is not suited to irradiate waste water flowing in the effluent channel in an effective and economic manner.

EP 0371735 A discloses an apparatus for the disinfection of waste water by means of UV radiation. The apparatus comprises a UV radiation zone through which the water flows, a device for producing turbulence in the waste water preceding the UV radiation zone and a device for establishing a uniform water level following that zone. This known apparatus is a typical example of an apparatus located downstream of a final clarification basin and, therefore, requires additional structures as mentioned above.

FR 2768718 A, DE 4206596 A and DE 4134711 A disclose further UV irradiation devices and chambers that are located downstream of the outlet of a clarification basin or sedimentation vessel and, in addition, are complicated and require additional space, parts, components and structures.

US 5151174 A discloses an installation for the disinfection of clarified waste water, wherein a UV irradiation apparatus is provided in a siphon in form of an overground pipe having an inlet end that is connected to a head-water conduit and an outlet end that is connected to a low-water conduit. This installation has also the above mentioned shortcomings.

### SUMMARY OF THE INVENTION

An object of the present invention is to provide UV radiation of clarifier effluent or clarified waste water in an efficient, economical and practicable manner.

According to the present invention, this object is achieved by a method recited in appended independent claim 1 and an effluent launder recited in appended independent claim 3. Preferred further embodiments are characterized in appended subclaims.

In the method according to the invention for the degermination of flowing effluent or clarified and/or purified waste water by UV radiation, the effluent or waste water is drawn off from a secondary or final clarification basin by means of an effluent launder, preferably installed inside of the clarification basin, and the drawn off waste water flowing in the effluent launder is directed or guided to flow, prior to reaching an outlet of the effluent launder, downwardly into and through a UV irradiation cavity or chamber integrated in the effluent launder of the clarification basin. The UV irradiation chamber is formed below the regular or normal level of the bottom of the effluent launder of the clarification basin. The inner side of the irradiation chamber is preferably coated, at least partly, with photo-catalytically active titanium dioxide. In addition, a titanium oxide coating may be provided on further inside portions of the effluent launder.

Photo-calalytically active titanium dioxide is effective against oestrogens, oestrogenic chemicals, antibiotics and similar chemical, pharmaceutical and natural compounds and related contaminants. The invention covers any other coating material having the same or a similar effect.

In an effluent launder according to the invention for a secondary or final clarification basin, a UV irradiation cavity or chamber including a removably installed UV radiation apparatus is integrated in the effluent launder adjacent or close to an outlet of the effluent launder. Preferably, there are provided two UV irradiation chambers, one on one side of the launder outlet and the other on the other side of the launder outlet. According to the invention, the UV irradiation cavity is integrated in the effluent launder below the regular or normal level of the bottom of the effluent launder. The UV irradiation apparatus is stationary arranged within the UV irradiation chamber, i.e at a defined location within the effluent launder and is supported by the effluent launder.

The essence of the present invention consists, therefore, therein to integrate a waste water treatment apparatus, particularly in form of a degermination apparatus explained herein in more detail, into a launder proper of a clarification basin or making it an integral part thereof. Most advantageously, this apparatus is formed below the normal level of the bottom of a conventional launder. With a view to the production and the operation including the maintenance of the installation, this is an extremely economical and practicable solution, considering that a substantially comprehensive treatment of the waste water becomes possible already before the outlet of the effluent launder or clarification basin, respectively. The invention is directed both to a correspondingly designed launder and a correspondingly designed segment of a launder.

For the economic degermination of the water treated in biological treatment plants, the launder segments preferably arranged on the two sides of the launder outlet of the launder of a final clarification basin are preferably shaped by a deepening such that they can house a removable or exchangeable apparatus in which UV radiators are arranged. For simultaneous oxidative inactivation of oestrogens and related chemical compounds, furthermore, the deepening of a launder segment is preferably coated with photo-catalytically active titanium dioxide and provided with UV radiators of suitable intensity. Based on such preferred combined integration of both the UV irradiation and the treatment by making use of titanium dioxide in the radiation cavity according to the invention, an extremely economic and comprehensive post-treatment of the waste water becomes possible.

Alternatively or in addition to the titanium dioxide coating, oxidation agents, such as hydrogen peroxide, already referred to above, or peroxy acids, such as peracetic acid, may be added, for instance via a supply line.

Due to the economic construction implemented according to the invention, comprising direct integration of the UV device within one or more sections of the effluent launder or one or more separate segments of the effluent launder, considerably less material is used as compared to conventional individual UV reactors located downstream of the launder or basin outlet. The non-use of piping from launder outlet or basin outlet, respectively, to the UV reactor, of additional pumps and encasing of the UV reactors leads to the saving of resources. The same applies with respect to the integration of means for inactivating oestrogen substances and the like in the effluent launder or the segments of the effluent launder, respectively.

The degermination of the complete effluent of the treatment plant, particularly, when feeding weak bodies of receiving waters, will avoid the contamination with bacteria and become epidemically-hygienically harmless.

For degermination, UV low-pressure radiators are preferably employed, and for the oxidative inactivation of substances having the effect of oestrogen, low-pressure and medium-pressure radiators are preferably employed. Coating with titanium dioxide is preferably effected by vapor deposition process.

The common conventional cleaning of the effluent channel or effluent launder from above by means of rotating brushes is not obstructed by the design of the effluent launder according to the invention. Electric connections from underneath can more easily be made and are less disturbing. Exchange of the complete UV radiation apparatus instead of individual UV modules is possible.

In accordance with a further development, the UV radiation cavity or chamber is, at least partly, covered by a removable cover being provided at the level of the bottom of the effluent launder. The cover is allowed to pass water, i.e. it has openings or through-holes that allow water to pass through the cover.

The water-passing cover preferably includes lamellar metal sheets successively arranged in the flow direction and extending at right angles relative to the flow direction for protectively shielding or shading from and back-reflecting the UV light. The metal sheets are preferably adjustable and shaped as flow guiding sheets promoting by adjustment thereof relative to the flow direction that the waste water enters into the UV radiation chamber. For adjustment, each one or a great number of the metal sheets is rotatable around a longitudinal axis of the respective sheet, which longitudinal axis extends in an essentially horizontal plane and under a right angle with respect to the flow direction of the waste water or longitudinal direction of the UV irradiation chamber. Hence, the cover may have a design similar to a window shade or window blind.

The bottom of the UV radiation chamber may either extend substantially horizontally up to the launder outlet or slightly slanted in direction to the outlet or, alternatively, is defined by a tub-like deepening in front of the launder outlet.

In accordance with one embodiment of the invention, the launder is broadened in the area of the radiation cavity or chamber.

The UV radiation apparatus comprises tubular UV radiation modules preferably extending essentially horizontally and at right angles relative to the flow direction or the longitudinal direction of the launder, respectively.

In a wall section defining the UV radiation cavity, a passage is preferably provided for an electric cable to supply electric energy to the UV radiation apparatus.

In the irradiation cavity, cleaning jets operated by pressurized water are preferably provided serving to remove any coating on the UV irradiation apparatus and, if possible, also on the inner wall of the UV irradiation cavity. The pressurized water supply is provided in the same way as the electric supply by a passage in a side wall or bottom section of the UV irradiation cavity so that the effluent launder proper is free from any structural components and the cleaning of the effluent launder is, therefore, not impaired by the course of a sweeping rake rotating in circular basins. In view of the purification effect by the jets, the intervals for basic cleaning including removal of the UV irradiation apparatus can be extended.

In a substantially vertically directed effluent pipe/effluent box of the launder outlet, an additional UV irradiation apparatus may be provided according to the invention preferably including UV irradiation modules extending in flow direction, i.e. in vertical direction.

Most advantageously, the effluent launder as well as any sections, segments and parts thereof including the UV irradation chamber and the cover of the chamber are made of stainless steel.

### BRIEF DESCRIPTION OF THE DRAWINGS

Preferred exemplified embodiments of the present invention will be made apparent in the course of the following description with reference to the accompanying drawings, in which:
Figure 1 is a top view of a portion of a final clarification basin having an effluent launder in accordance with a first exemplified embodiment of the invention;
Figure 2 is a top view of one segment of the effluent launder according to Fig. 1;
Figure 3 is a longitudinal cross section through the launder segment along line III-III of Fig. 2;
Figure 4 is a cross section through the launder segment along line IV-IV of Fig. 2;
Figure 5 is a top view of a portion of a final clarification basin having an effluent launder in accordance with a second exemplified embodiment of the invention;
Figure 6 is a top view of a segment of the effluent launder according to Fig.5;
Figure 7 is a longitudinal cross section through the launder segment along line VII-VII of Fig. 6; and
Figure 8 is a cross section through the launder segment along line VIII-VIII of Fig. 6.

### DETAILED DESCRIPTION OF PREFERRED EMBODIMENTS

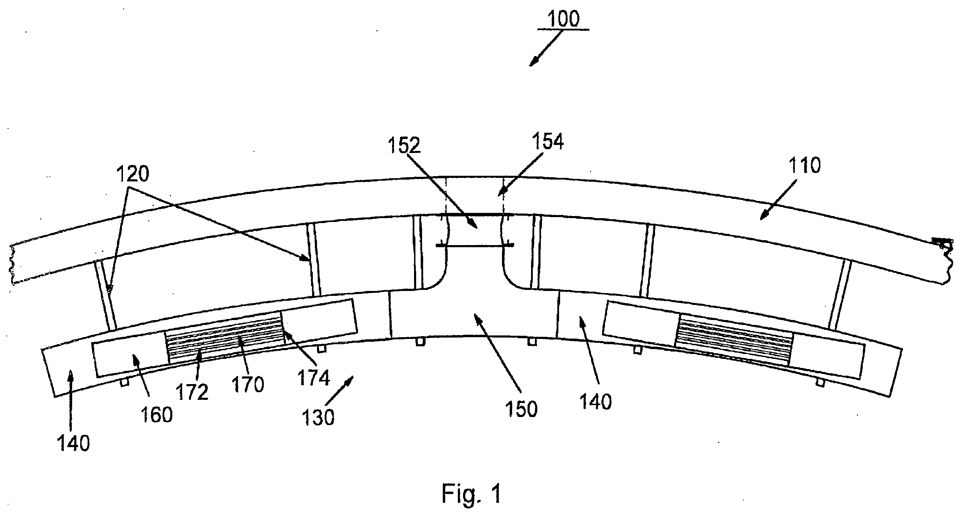

Figure 1 shows in a diagrammatic representation a portion of a final clarification basin 100 considered for explaning the invention. Final clarification basin 100 has a circular circumferential wall 110 forming the outer wall of the basin and in general is made of concrete. At the inner side of circumferential wall 110, inwardly projecting supports 120 are mounted in circumferentially spaced relationship. Supports 120 serve for supporting a circumferential effluent launder 130. Effluent launder 130 is preferably height-adjustable and movably supported on supports 120. In the embodiment shown, a clearance is provided between effluent launder 130 and the inner side of circumferential wall 110. Waste water clarified in the final clarification basin can, therefore, enter along and near the circumferential wall 110 into effluent launder 130 from both of its sides. In general, this happens by overflow over an overflow weir provided at the upper edge of the effluent launder and/or by underwater withdrawal via holes provided underneath the water level in the effluent launder. The waste water having entered from the basin into the effluent launder flows in the effluent launder to a launder outlet connected in general with an outlet tube leading through the outer wall of the basin to the outside. Starting from a location diametrically opposed to the launder outlet, the launder bottom has preferably a slight slope in the direction to the launder outlet. The effluent launder is preferably made of stainless steel and consists of a plurality of segments which are welded together or otherwise connected with one another. The inflow into the basin is generally effected in the center of the basin by means of a flow direction changer.

Final clarification basins having an inflow and an outflow system of the kind described above have generally been known. Concerning a prior art inflow system, reference is made to DE 4437330. Prior art outflow systems and effluent launders to which the present invention can be applied have been described for instance in DE 9421888 U, DE 29611775 U or DE 29720427 U.

Figure 1 shows three segments of a plurality segments connected with one another to constitute a complete annular effluent launder 130. There is shown, in particular, a launder outlet segment 150, referred to in short as "launder outlet", and launder segments 140 adjacent to the two sides of launder outlet 150.

Launder outlet 150 is substantially made in a conventional manner and is connected via an expansion joint 152 to an outlet tube 154 passing through circumferential wall 110. The outlet tube 154 serves for expansion adjustment and is only schematically outlined in Figure 1.

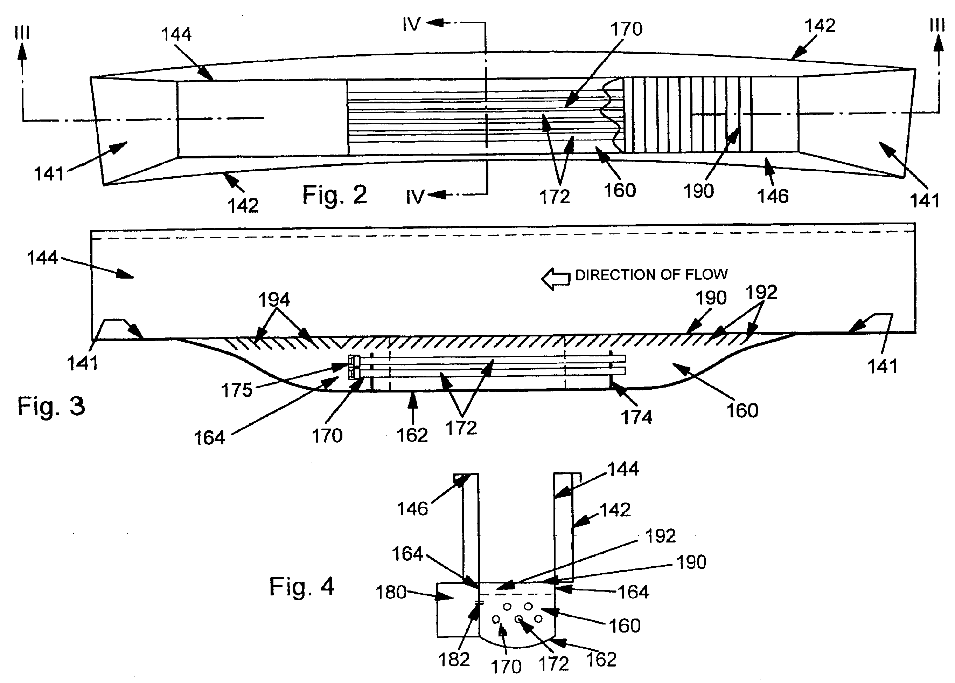

The two segments 140 connected with launder outlet 150 are provided in accordance with a first exemplified embodiment of the invention. In order to explain this embodiment of the invention, segment 140 adjacent to the right side of launder outlet 150 will be described in more detail by referring to Figures 2 through 4. Segment 140 adjacent to the left side of launder outlet 150 is, in principle, of identical structure, however, the waste water flowing in effluent launder 130 to launder outlet 150 does not flow from right to left but rather, the other way, from left to right.

Launder segments 140 are connected at their ends, which are opposite to the ends welded or otherwise connected to launder outlet 150, to the ends of adjacent conventional launder segments, for instance by welding. The common or conventional launder segments are not shown; they have a continuous launder bottom and side walls adjoining the launder bottom at both sides. The upper edges of the two side walls are shaped in the form of overflow weirs over which the waste water clarified in the basin flows into the effluent launder.

In contrast to the conventional launder segments not shown, launder segment 140 comprises side walls 142 the upper edges of which are higher than the water level to be expected in the basin. Furthermore, no under-water withdrawal holes are provided in side walls 142. No waste water can, therefore, pass over and/or through side walls 142 from the basin into launder segment 140. The same applies to launder outlet 150. It is therefore that only from the adjacent conventional launder segment, clarified waste water can get from the basin into launder segment 140 and therefrom to launder outlet 150.

In contrast to the conventional launder segments not shown, furthermore, a UV irradiation cavity or chamber 160 having the form of a deepening and arranged below the level of the normal launder bottom 141 is integrated into launder segment 140. UV irradiation chamber 160 extends in longitudinal direction of launder segment 140 and has essentially a tub-shaped form. UV irradiation chamber 160 is defined on its underside by bottom 162 and at the sides thereof by a side wall 164 each. At its upper side, UV irradiation chamber 140 is defined by a removable cover 190 passagable for water, i.e. allowing water to pass through. Water-passing cover 190 has the shape of for instance a grid or grate and extends at the level of launder bottom 141 which is recessed in the area of UV irradiation chamber 160 and replaced by cover 190. Bottom 162 of UV irradiation chamber 160 adjoins liquid-tightly launder bottom 141 at the two ends of UV irradiation chamber 160.

In UV irradiation chamber 160, a UV irradiation apparatus 170 is removably installed by means of support and holding plates 174. UV irradiation apparatus 170 includes a plurality of UV irradiation modules 172 arranged in parallel relative to each other and spaced relative to each other and extending in the longitudinal direction of the launder. UV irradiation modules 172 consist of an elongated UV emitter and, as common for employment under water, of a covering pipe surrounding the UV emitter in spaced relationship. Modules 172 are arranged in staggered relation relative to each other, as can particularly be taken from Figure 4. At the open end of the covering pipe, electric connections 175 are provided as sealed connections.

The electric supply of UV irradiation apparatus 170 is effected via junction box 180 provided outside of UV irradiation chamber 160 adjacent to the outside of one side wall 164 of UV irradiation chamber 160. In this side wall 164, liquid-tight passage 182 for the electric cable for connecting UV irradiation apparatus 170 is provided. The electric connection with UV irradiation apparatus 170 within UV irradiation cavity 160 is provided by means of a plug-in connection so that after removing cover 190, UV irradiation apparatus 170 can without any difficulties be removed from irradiation cavity 160 as well.

As can particularly be taken from Figure 3, lamellae or metal sheets 192 and 194 are provided at the underside of cover 190. The metal sheets 192 and 194 define openings between each other to allow water passing through cover 190. Furthermore, these sheets are arranged and shaped so that they serve as flow guidance, on one hand, and protect against emergent UV light, on the other. Flow guiding and UV protection sheets 192 are adjusted relative to the flow direction, indicated in Figure 3 by an arrow, so that they force the waste water flowing in effluent launder 130 towards launder outlet 150 downward into UV irradiation chamber 160 and such that they provide for a turbulence within the area of UV irradiation apparatus 170 around UV irradiation modules 172. This may be further promoted by additional flow guiding structural means in UV irradiation chamber 160.

As compared to sheets 192, flow guiding and UV protection sheets 194 are adjusted in such a manner that they force the waste water flowing in the downstream end portion of UV irradiation chamber 160 upward above the level of launder bottom 141. This may further be promoted by additional flow guiding structural means in UV irradiation chamber 160 as well.

The total or complete inflow of the waste water into UV irradiation chamber 160 and subsequent exit can be promoted by additional measures such as for instance by lowering launder bottom 141 at the downstream end relative to the upstream end, sloping or increasing the slope of the effluent launder in the direction towards launder outlet, i.e. in flow direction, dimensioning the cross section or the depth and the width, respectively, of UV irradiation cavity 160 in comparison to the width of the effluent launder and thus to the height of the water level in the launder, inclining launder segment 140 relative to launder outlet 150 (Figure 1) and the like. In accordance with the invention, these measures each may be applied either individually or in any combination.

For adaptation to different volume flows or water level heights in the effluent launder, flow guiding and UV protection sheets 192 and 194 extending at right angles relative to the flow direction or the longitudinal direction of the launder are preferably mounted to be adjustable. To this end, a few or each of the sheets are pivotably supported about a respective transverse axis. Adjustment may be made either manually or by motor, preferably also automatically depending on the water level height while the extent or amount of the adjustment may also vary from sheet to sheet.

In a preferred embodiment, cover 190 includes a plurality of rods spaced in parallel relative to each other in the direction of the launder, which rods support sheets 192 and 194 directed downwardly and extending in transverse direction of the launder. As for the rest, the sheets are shaped so that in any possible adjustment position, UV vision protection is provided.

As can be taken from Figures 2 and 4, UV irradiation chamber 160 in the representation depicted has a smaller width than the launder or launder segment 140, respectively. It is therefore that within launder side walls 142 additional side walls 144 are provided in spaced relation thereto and aligned with side walls 164 of UV irradiation chamber 160. At the two outer ends of launder segment 140, launder side walls 144 diverge and join launder side walls 142. Inner launder side walls 144 safeguard that the whole in-flowing waste water passes through the water-passing cover 190 into UV irradiation chamber 160.

Effluent launder 130 including launder segments 140 and launder outlet 150 is made of stainless steel. For better reflection of the UV light, all or at least a few of the stainless steel surfaces facing UV irradiation chamber 160 are electrically polished. Additionally or alternatively, all or at least a few of the stainless steel surfaces facing UV irradiation chamber 160 are coated with photo-catalytically active titanium dioxide. In this manner, launder segment 140 can be used in combination with one or a plurality of suitable UV irradiation apparatus for degermination and/or oxidative inactivation of substances of the waste water.

As can particularly be taken from Figure 4, the space above launder segment 140 or cover 190, respectively, in launder segment 140 is completely free from structural installations so that the normal cleaning of the effluent launder throughout the length thereof by means of brushes moved along the launder is neither prevented nor disturbed.

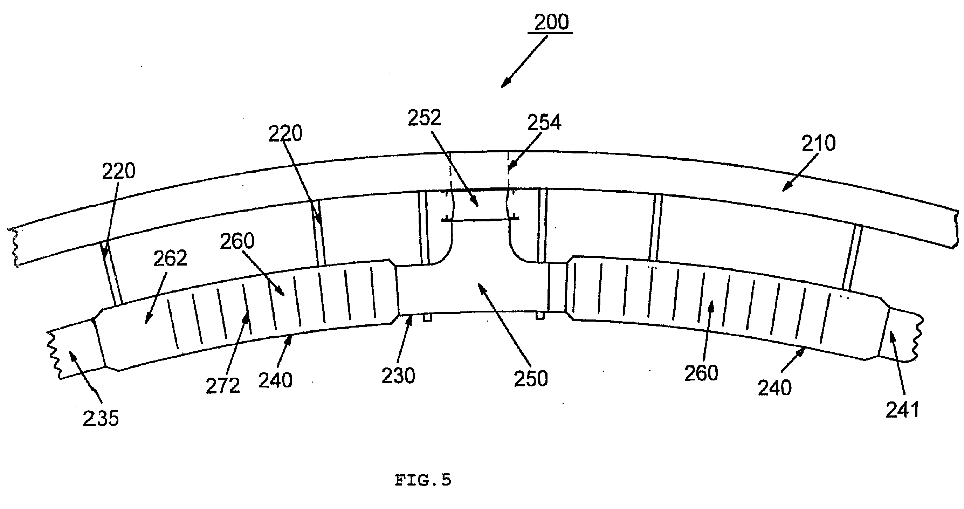

Figure 5 shows in a diagrammatic representation a part of final clarification basin 200 considered for explaining the invention. Final clarification basin 200 has the same common basic structure as has final clarification basin 100 so that, in this respect, reference can be made to the description of final clarification basin 100. Hence, there are provided a circular circumferential wall 210 forming the outer wall of the basin, supports 220, a circumferential effluent launder 230 and an inlet, not shown.

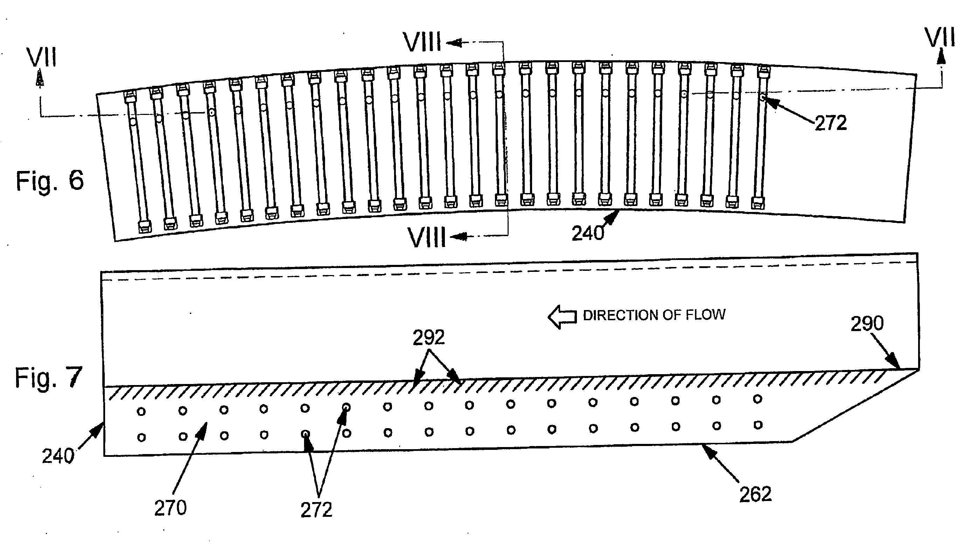

In Figure 6, three segments of the numerous segments welded or otherwise joined together to form an annular effluent launder 230 are shown. An essentially conventional effluent launder outlet 250 and two segments 240, designed in accordance with the invention and located at the two sides of launder outlet 250, are depicted. Launder outlet 250 is connected, as in final clarification basin 100, via an expansion joint 252 to outlet tube 252 passing through circumferential wall 210.

The two segments 240 welded to launder outlet 250 are formed in accordance with a second exemplified embodiment of the invention. In order to explain this embodiment of the invention, segment 240 adjacent to the right side of launder outlet 250 in Figure 5, will be described in more detail by referring to Figures 6 through 8.

Segment 240 adjacent to the left side of launder outlet 250 is, in principle, of identical structure.

Launder segments 240 are welded or otherwise connected at those of their ends, which are opposite to launder outlet 250, to adjacent conventional launder segments. In Figure 5, the end of a conventional launder segment 232 welded to left launder segment 240 is indicated. For the conventional launder segments, the statements made in connection with final clarification basin 100 will apply.

In contrast to the conventional launder segments which, by overflow and/or under-water withdrawal holes, draw clear water from the basin, launder segment 240, too, has no means for drawing waste water from the basin and, therefore, has relatively higher, overflow preventing and hole-free side walls 242. The same applies to launder outlet 250.

Launder segment 240 corresponding to launder segment 140 has a UV irradiation cavity or chamber 260 located under the normal level of launder bottom 242. Chamber 260 is defined by bottom 262, side walls 264 and removable water-passing cover 290.

Launder segment 240 essentially differs from launder segment 140 in that bottom 262 of UV irradiation chamber 260 and hence also cover 290 extend up to launder outlet 250, that UV irradiation modules 272 of UV irradiation apparatus 270 extend at right angles relative to the flow direction or longitudinal direction of the launder, and that launder segment 240 is broadened in the region of UV irradiation chamber 260.

As in the case of launder segment 140, UV irradiation apparatus 270 is removably arranged by means of support and holding plates 274, and the electric supply of UV irradiation apparatus 270 is effected via a not shown junction box located at the outer side of bottom 262 or of side wall 264 of UV irradiation chamber 260.

As can particularly be taken from Figure 7, there are provided, at the underside of cover 290, lamellae or metal sheets 292 corresponding to flow guidance and UV protection sheets 192. As for the rest, the statements made in connection with cover 190 and sheets 192 apply to cover 290 and sheets 292 as well.

Sheets corresponding to sheets 194 are not provided in launder segment 240 since bottom 262 and cover 290 extend up to launder outlet 250. In this connection it is assumed that launder outlet 250 is at about the level of bottom 262 or lower.

As can be taken from Figure 5, UV irradiation chamber 260 in the embodiment shown has a larger width as the effluent launder proper. Launder segment 240 has, therefore, at least in the region of UV irradiation chamber 260, launder side walls 244 aligned with side walls 264 of UV irradiation chamber. Such arrangement simplifies the removal of UV irradiation apparatus 270 provided with UV irradiation modules 272 arranged at right angles, and permits even in case of transverse arrangement employment of relatively long UV modules. By using a broader UV irradiation chamber, in addition, the flow rate and thus the retention time of the waste water to be treated in the UV irradiation chamber can be influenced. Independently from the disposition of the remaining launder segments, a width-to-depth relationship of UV irradiation cavity 260 which constitutes an optimum for the treatment can be selected.

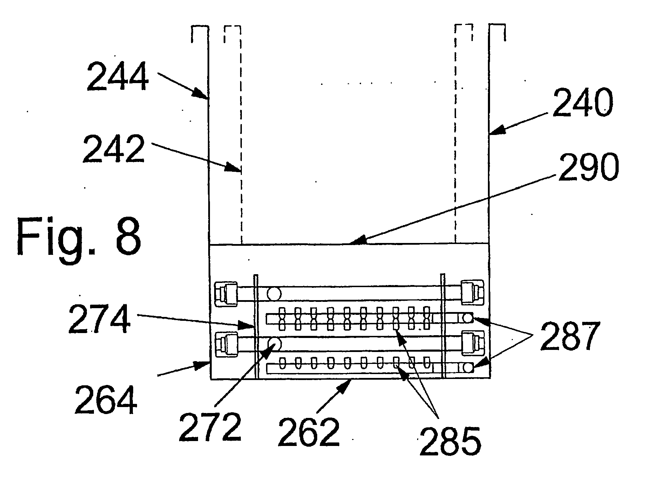

At the two ends of launder segment 240, as can be taken from Figure 5, the width between launder side walls 144 decreases up to the launder width of adjacent launder segment 235 and of launder outlet 250 in order to provide continuous transition. In Figure 8, launder walls 242 of launder outlet 250 which have a smaller width distance are shown by dotted lines.

As can also be taken from Figure 8, cleaning jets 285 operated by water pressure are provided for cleaning the irradiation chamber and the UV modules arranged therein. These jets are fed, via feeding pipes 287, for instance by means of a pump not shown, the pipes extending in parallel to the UV modules. Based on this possibility of cleaning without any necessary constructional assembly, the service life of UV irradiation apparatus 270 can be extended. The pump is preferably synchronously operated with the circular movement of the rotating sweeping rake of the final clarification basin which triggers pump operation for a predetermined period of time. The cleaning water is taken, at the launder, from the clear water zone of the final clarification basin. A corresponding cleaning system can be provided in the first exemplified embodiment as well.

Launder segment 240, as launder segment 140, is made of stainless steel and has stainless steel surfaces which are either electrically polished and/or coated with photo-catalytically active titanium dioxide. In this respect, it should be noted that the inside surfaces of the entire launder segments 140, 142 can be coated with titanium dioxide or a material of similar effect. By doing so, the sun light falling into the open segment can be used for activation.

In launder segment 240, as can particularly be taken from Figure 8, the launder proper above launder bottom 241, or cover 290, respectively, is completely free from any structural installations.

Each one of the launder segments 140, 240 may have a length of up to about 5 m depending on the overall size of the clarification basin. Generally, the length is 3 to 4 m. As these launder segments are preferably provided on both sides of the outlet 150, 250, the total treating length can, for example, be about 10 m.

The present invention is not restricted to the applications and embodiments as shown in the drawings and as described. Those versed in the art will be able to provide a number of variations without departing from the scope of the invention. It is for instance within the scope of the invention to employ, depending on power, wave length, internal pressure, shape and the like, such UV irradiation modules by means of which optimum treatment of the waste water is obtained. The same applies for the disposition of the individual UV irradiation modules and of the UV irradiation modules in relation relative to each other as well as with relation to the flow direction, for instance in longitudinal direction, at right angles or even diagonal thereto, and in relation to stainless steel surfaces which are electrically polished and/or coated with photo-catalytically active titanium dioxide. Furthermore, the UV modules could be arranged at two or more levels vertically spaced from each other.

## Claims

1. Method for degermination of flowing waste water by UV irradiation, wherein waste water flowing in an effluent launder (130; 230) of a final clarification basin (100; 200) to a launder outlet (150; 250) is allowed to flow, prior to reaching the launder outlet, downwardly into and through an UV irradiation chamber (160; 260) integrally provided in the effluent launder below the level of the launder bottom (141, 241).

2. Method according to claim 1, wherein for simultaneous oxidative inactivation of substances present in the water, such as oestrogens, related chemical compounds and similar contaminants, the inner side of said UV irradiation chamber (160; 260) is coated, at least partly, with photo-catalytically active titanium dioxide and/or a material producing a similar effect.

3. Effluent launder for a final clarification basin for degermination of flowing waste water by UV irradiation, wherein a UV irradiation chamber (160; 260) is integrally provided in the effluent launder near or adjacent to a launder outlet (150; 250), said UV irradiation chamber (160; 260) being located below the level of a bottom of the launder and being provided with a removably installed UV irradiation apparatus (170; 270).

4. Effluent launder for a final clarification basin according to claim 3, wherein the UV irradiation chamber (160; 260) is covered, at least partly, by a removable cover (190; 290) allowing to pass water, said cover being arranged at the level of the launder bottom.

5. Effluent launder according to claim 4, wherein said cover comprises lamellar metal sheets (192, 194; 292) arranged at right angles relative to the flow direction for protectively shading and back-reflecting the UV light.

6. Effluent launder according to claim 5, wherein said, preferably adjustable, metal sheets (192, 292) are shaped as flow guiding sheets promoting by the adjustment thereof relative to the flow direction an entry of the waste water into said UV irradiation chamber (160; 260).

7. Effluent launder according to one of claims 3 through 6, wherein a bottom (262) of said UV irradiation chamber (260) extends, substantially horizontally or with a slight downward slope, to said launder outlet (250).

8. Effluent launder according to one of claims 3 through 6, wherein a bottom (162) of said UV irradiation chamber (160) defines, in front of the launder outlet (150), a tub-like deepening.

9. Effluent launder according to one of claims 3 through 8, wherein said effluent launder is broadened in the region of said irradiation chamber (260).

10. Effluent launder according to one of claims 3 through 9, wherein said UV irradiation apparatus (270) comprises tubular UV irradiation modules (272) extending at right angles relative to the flow direction or longitudinal direction of the launder.

11. Effluent launder according to one of claims 3 through 10, wherein in a wall section defining said the UV Irradiation chamber, a passage (182) for an electric cable for an electric supply of said UV irradiation apparatus is provided.

12. Effluent launder according to one of claims 3 through 11, wherein at least one inner wall section of said UV irradiation chamber (160; 260) is coated with photo-catalytically active titanium dioxide.

13. Effluent launder according to one of claims 3 through 12, wherein cleaning jets for the removal of coating on the UV irradiation apparatus (170; 270) are provided in said irradiation chamber (160; 260).

14. Effluent launder according to one of claims 3 through 13, wherein an additional UV irradiation apparatus comprising UV irradiation modules preferably extending in flow direction or vertical direction is provided in a substantially perpendicularly arranged discharge pipe of said launder outlet.

## Patentansprüche

1. Verfahren zur Entkeimung von fließendem Abwasser durch UV-Bestrahlung, wobei das Abwasser, das in einen Abflusskanal (130; 230) eines Endklärbeckens (100; 200) zu einem Kanalauslass (150; 250) fließt, vor dem Erreichen des Kanalauslasses stromabwärts in und durch eine UV-Bestrahlungskammer (160; 260) fließen gelassen wird, welche integral in dem Abflusskanal unter dem Niveau des Kanalbodens (141; 241) vorgesehen ist.

2. Verfahren nach Anspruch 1, wobei zur gleichzeitigen oxydativen Inaktivierung von im Wasser vorhandenen Substanzen, wie etwa Östrogenen, entsprechenden chemischen Verbindungen und ähnlichen Schmutzstoffen die Innenseite der UV-Bestrahlungskammer (160; 260) zumindest teilweise mit einem photokatalytisch aktiven Titanoxyd und/oder einem Material beschichtet ist, welches eine ähnliche Wirkung erzeugt.

3. Abflusskanal für ein Endklärbecken zur Entkeimung von fließendem Abwasser durch UV-Bestrahlung, wobei eine UV-Bestrahlungskammer (160; 260) integral in dem Abflusskanal in der Nähe oder benachbart zu einem Kanalauslass (150; 250) vorgesehen ist, wobei die UV-Bestrahlungskammer (160; 260) unter dem Niveau eines Bodens des Kanals angeordnet und mit einer entfernbar installierten UV-Bestrahlungsvorrichtung (170; 270) versehen ist.

4. Abflusskanal für ein Endklärbecken nach Anspruch 3, wobei die UV-Bestrahlungskammer (160; 260) zumindest teilweise durch eine entfernbare Abdeckung (190; 290) abgedeckt ist, die Wasser hindurch treten lässt, wobei die Abdeckung auf dem Niveau des Kanalbodens angeordnet ist.

5. Abflusskanal nach Anspruch 4, wobei die Abdeckung streifenförmige Metallbleche (192, 194; 292) aufweist, welche relativ zu der Fließrichtung rechtwinklig angeordnet sind, um das UV-Licht schützend abzuschatten und zurück zu reflektieren.

6. Abflusskanal nach Anspruch 5, wobei die bevorzugt einstellbaren Metallbleche (192, 292) als Strömungsführungsbleche geformt sind, welche durch eine Einstellung relativ zur Strömungsrichtung zulaufendes Abwasser in die UV-Bestrahlungskammer (160; 260) fördern.

7. Abflusskanal nach einem der Ansprüche 3 bis 6, wobei ein Boden (262) der UV-Bestrahlungskammer (260) sich im Wesentlichen horizontal oder mit einer geringfügigen Abwärtsneigung zu dem Kanalauslass (250) erstreckt.

8. Abflusskanal nach einem der Ansprüche 3 bis 6, wobei der Boden (162) der UV-Bestrahlungskammer (160) vor dem Kanalauslass (150) eine rohrartige Vertiefung festlegt.

9. Abflusskanal nach einem der Ansprüche 3 bis 8, wobei der Abflusskanal im Bereich der Bestrahlungskammer (260) verbreitert ist.

10. Abflusskanal nach einem der Ansprüche 3 bis 9, wobei die UV-Bestrahlungskammer (270) rohrförmige Bestrahlungsmodule (272) aufweist, die sich rechtwinklig relativ zur Strömungsrichtung bzw. der Längsrichtung des Kanals erstrecken.

11. Abflusskanal nach einem der Ansprüche 3 bis 10, wobei in einem die UV-Bestrahlungskammer festlegenden Bandabschnitt ein Durchlass (182) für ein elektrisches Kabel zur elektrischen Stromversorgung der UV-Bestrahlungsvorrichtung vorgesehen ist.

12. Abflusskanal nach einem der Ansprüche 3 bis 11, wobei zumindest ein Innenrandabschnitt der UV-Bestrahlungskammer (160; 260) mit photokatalytisch aktivem Titanoxyd beschichtet ist.

13. Abflusskanal nach einem der Ansprüche 3 bis 12, wobei Reinigungsstrahlen zum Entfernen einer Ablagerung auf der UV-Bestrahlungsvorrichtung (170; 270) in der UV-Bestrahlungskammer (160; 260) vorgesehen sind.

14. Abflusskanal nach einem der Ansprüche 3 bis 13, wobei eine zusätzliche UV-Bestrahlungskammer, welche UV-Bestrahlungsmodule aufweist, die sich bevorzugt in Strömungsrichtung bzw. in vertikaler Richtung erstrecken, in einem im Wesentlichen lotrecht angeordneten Austragrohr des Kanalauslasses erstrecken.

## Revendications

1. Procédé de dégermination des eaux usées circulantes par rayonnement UV, dans lequel les eaux usées s'écoulant dans une rigole de coulée d'effluent (130; 230) d'un bassin de clarification final (100 ; 200) jusqu'à une sortie (150; 250) de rigole de coulée sont autorisées à s'écouler, avant d'atteindre la sortie de rigole de coulée, vers le bas dans et à travers une chambre de rayonnement UV (160 ; 260) prévue de manière solidaire dans la rigole de coulée d'effluent au-dessous du niveau du fond (141, 241) de la rigole de coulée.

2. Procédé selon la revendication 1, dans lequel pour l'inactivation oxydative simultanée des substances présentes dans l'eau, telles que des oestrogènes, des composés chimiques relatifs et des contaminants similaires, le côté interne de ladite chambre de rayonnement UV (160 ; 260) est recouvert, au moins partiellement, avec un dioxyde de titane actif de manière photocatalytique et/ou un matériau produisant un effet similaire.

3. Rigole de coulée d'effluent pour un bassin de clarification final pour la dégérmination des eaux usées circulantes par rayonnement UV, dans laquelle une chambre de rayonnement UV (160 ; 260) est prévue de manière solidaire dans la rigole de coulée d'effluent à proximité ou de manière adjacente à une sortie (150 ; 250) de rigole de coulée ; ladite chambre de rayonnement UV (160 ; 260) étant située au-dessous du niveau d'un fond de la rigole de coulée et étant prévue avec un appareil de rayonnement UV (170 ; 270) installé de manière amovible.

4. Rigole de coulée d'effluent pour un bassin de clarification final selon la revendication 3, dans laquelle la chambre de rayonnement UV (160; 260) est recouverte, au moins partiellement, par un couvercle amovible (190 ; 290) permettant le passage de l'eau, ledit couvercle étant agencé au niveau du fond de la rigole de coulée.

5. Rigole de coulée d'effluent selon la revendication 4, dans laquelle ledit couvercle comprend des feuilles métalliques lamellaires (192, 194 ; 292) agencées en angle droit par rapport à la direction d'écoulement pour protéger et renvoyer la lumière UV.

6. Rigole de coulée d'effluent selon la revendication 5, dans laquelle lesdites feuilles métalliques (192, 292), de préférence ajustables, sont formées comme des feuilles de guidage d'écoulement favorisant par leur ajustement par rapport à la direction d'écoulement, une entrée des eaux usées dans ladite chambre de rayonnement UV (160 ; 260).

7. Rigole de coulée d'effluent selon l'une quelconque des revendications 3 à 6, dans laquelle un fond (262) de ladite chambre de rayonnement UV (260) s'étend, de manière sensiblement horizontale ou avec une légère pente descendante, vers ladite sortie (250) de la rigole de coulée.

8. Rigole de coulée d'effluent selon l'une quelconque des revendications 3 à 6, dans laquelle un fond (162) de ladite chambre de rayonnement UV (160) définit, en face de la sortie (150) de rigole de coulée, un renforcement en forme de cuve.

9. Rigole de coulée d'effluent selon l'une quelconque des revendications 3 à 8, dans laquelle ladite rigole de coulée d'effluent est élargie dans la région de ladite chambre de rayonnement (260).

10. Rigole de coulée d'effluent selon l'une quelconque des revendications 3 à 9, dans laquelle ledit appareil de rayonnement UV (270) comprend des modules de rayonnement UV tubulaires (272) s'étendant en angle droit par rapport à la direction d'écoulement ou la direction longitudinale de la rigole de coulée.

11. Rigole de coulée d'effluent selon l'une quelconque des revendications 3 à 10, dans laquelle dans une section de paroi définissant ladite chambre de rayonnement UV, on prévoit un passage (182) pour un câble électrique pour une alimentation électrique dudit appareil de rayonnement UV.

12. Rigole de coulée d'effluent selon l'une quelconque des revendications 3 à 11, dans laquelle au moins une section de paroi interne de ladite chambre de rayonnement UV (160 ; 260) est recouverte avec du dioxyde de titane actif de manière photocatalytique.

13. Rigole de coulée d'effluent selon l'une quelconque des revendications 3 à 12, dans laquelle on prévoit des jets de nettoyage pour retirer le revêtement sur l'appareil de rayonnement UV (170 ; 270) dans ladite chambre de rayonnement (160 ; 260).

14. Rigole de coulée d'effluent selon l'une quelconque des revendications 3 à 13, dans laquelle un appareil de rayonnement UV supplémentaire comprenant des modules de rayonnement UV s'étendant de préférence dans la direction d'écoulement ou la direction verticale est prévu dans un tuyau de décharge agencé de manière sensiblement perpendiculaire de ladite sortie de rigole de coulée.
